# EUROPÄISCHE PATENTSCHRIFT

(11) **EP 0 710 742 B1**
(45) Veröffentlichungstag und Bekanntmachung des Hinweises auf die Patenterteilung: **24.06.1998**
(21) Anmeldenummer: 95116916.8
(22) Anmeldetag: 26.10.1995
(51) Int. Cl.: D21H 19/40, B41J 2/01

(54) **Pigmente für Druckträger nach dem Tintenstrahl-Druckverfahren**
Pigments for printing supports according to the ink jet printing process
Pigments pour des supports d'impression selon le procédé d'impression par jet d'encre

(30) Priorität: 26.10.1994 DE 4438306
(43) Veröffentlichungstag der Anmeldung: 08.05.1996
(73) Patentinhaber: SÜD-CHEMIE AG, D-80333 München (DE)
(72) Erfinder: Flessner, Uwe, Dr., D-81375 München (DE); Ruf, Friedrich, Dr., D-84184 Ast (DE); Wendrich, Genoveva, D-84051 Essenbach-Ohu (DE)
(74) Vertreter: Patentanwälte Dipl.-Ing. R. Splanemann Dr. B. Reitzner Dipl.-Ing. K. Baronetzky

(56) Entgegenhaltungen:
- EP-A- 0 337 771
- EP-A- 0 489 422
- EP-A- 0 542 215
- EP-A- 0 572 037
- DE-A- 3 935 242
- DE-A- 4 038 886
- US-A- 4 792 487

## Beschreibung

Die Erfindung betrifft die Verwendung von Pigmenten in bindemittelhaltigen Streichfarben für Druckträger nach dem Tintenstrahl-Druckverfahren.

Unter den berührungsfreien (non impact) Druckverfahren wird das Tintenstrahl-(Inkjet-)Verfahren immer populärer. Hierbei werden kleine und wohldefinierte Tintentröpfchen in wäßriger Phase kontinuierlich (kont-inierliches Verfahren) oder auf Anforderung ("drop on demand"-Verfahren) auf einen Druckträger, wie Papier, Karton oder Folien, aufgesprüht und ein Bild erzeugt. Bei den weitverbreiteten, nach dem "drop on demand"-Verfahren arbeitenden PC-Druckern werden die Tintentröpfchen mittels im Vorratstank gebildeter Gasbläschen durch die Austrittsdüse des Druckkopfes gedrückt ("Bubble-jet"). Die Tröpfchen sollen auf dem Druckträger kreisförmig auseinanderlaufen, wobei zur Erzielung einer hohen Punktschärfe ein geringer Punktdurchmesser und klare Konturen erforderlich sind. Weiter wird eine rasche Penetration der Tintenlösemittel Wasser und Glykol in den Druckträger gefordert, um eine gute Wischfestigkeit des Druckes zu erzielen. Beim Penetrationsvorgang sollen allerdings die anionischen Azofarbstoffe der Tinte möglichst an der Oberfläche des Druckträgers fixiert werden, um eine hohe Farbdichte zu erreichen und ein Durchschlagen der Farbe auf die Rückseite des Druckträgers zu vermeiden.

Diese - vor allem auch beim Mehrfarbendruck gültigen Anforderungen - werden für die Druckträger Papier und Karton nach dem Stand der Technik eingelöst durch Striche mit gefällten und/oder pyrogenen Kieselsäuren oder Verschnitten dieser Pigmente mit herkömmlichen Streichpigmenten, wie z.B. Aluminiumhydroxid oder Calciumcarbonat. Die Strichgewichte liegen meist um 10 g/m².

Eine zusammenfassende Darstellung über die Verwendung dieser Kieselsäurepigmente in bindemittelhaltigen Streichfarben für Druckträger nach dem Tintenstrahl-Druckverfahren findet sich im PTS-IZP-Seminarband "Streichfarben und Pigmente für Spezialpapiere", 1994, Seiten 13.2-1 und 14.4-1.

Die gefällten und pyrogenen Kieselsäuren haben jedoch neben ihrem hohen Preis den Nachteil, daß die daraus hergestellten Pigmentdispersionen schlechte rheologische Eigenschaften, d.h. eine zu hohe Viskosität, haben. Die Streichfarben lassen Feststoffgehalte von nur etwa 20 bis 25 Gew.-% zu, was vom energetischen Standpunkt aus ungünstig ist, da beim Streichvorgang viel Wasser verdampft werden muß und viele schnellaufende Streichsysteme, z.B. die sogenannten "Blade-coater" nicht verwendet werden können. Außerdem haben die Kieselsäuren beim Erreichen des Adsorbtionsmaximums für die Tinte die Neigung, daß diese durch den Druckträger durchschlägt, da Kieselsäuren aufgrund ihrer Struktur keine Sperrwirkung entfalten können.

Aus der DE-A-35 06 278 ist ein Verfahren zur Verbesserung des Holdouts von Druckfarben, Lacken und Beschichtungsmassen, enthaltend organische Lösungsmittel, auf Papier bekannt, bei dem ein organophiler Komplex aus einem quellfähigen smektitischen Schichtsilicat und einer Oniumverbindung in die Fasermasse oder in die Oberfläche des Papiers eingebracht wird, wobei der organophile Komplex durch Reaktion mit dem organischen Lösungsmittel eine Sperrschicht bildet. Der organophile Komplex wird nicht für Streichfarben für Druckträger nach dem Tintenstrahlverfahren verwendet, da die hierfür verwendeten Tinten auf wäßriger Basis sind und das wäßrige Dispergiermittel schnell wegschlagen muß.

Aus der EP-A-0 542 215 sind ähnliche wäßrige Feindispersionen eines organophilen Schichtsilicats bekannt, die aus einem quellfähigen kationenaustauschfähigen Schichtsilicat und einem damit umgesetzten quartären organischen Oniumsalz besteht und 3 bis 30 Gew.-%, bezogen auf das organophile Schichtsilicat, Polyvinylalkohol enthält. Die Feindispersion eignet sich u.a. als Streichmasse für Papier und Karton. Als Streichmasse für Druckträger nach dem Tintenstrahl-Druckverfahren ist sie nicht geeignet.

Aus der DE-A-42 17 779 (EP-A-0 572 037) ist ein Streichpigment zur Beschichtung von Druckträgern bekannt, das mindestens ein quellfähiges Schichtsilicat enthält, welches im wesentlichen ohne Bindemittel auf dem Druckträger fixierbar ist. Die Fasern des Druckträgers sollen sich ohne Bindemittel mit dem Pigment verbinden. Die Pigmente für die Druckträger nach dem Tintenstrahl-Druckverfahren müssen mit einem höheren Strichgewicht aufgebracht werden, wofür der Zusatz eines Bindemittels erforderlich ist.

Die EP-A-0 337 771 beschreibt ein Papier für das Offset- bzw. Tiefdruckverfahren, das mit einer ersten und einer zweiten pigmentierten, hydrophilen wasserabsorbierenden und porösen Streichfarbe beschichtet ist. Das Pigment der einen Schicht ist nicht-smektitisch, während das Pigment der anderen Schicht smektitisch ist und mindestens 60 Gew.-% eines in Wasser quellfähigen smektitischen Tons enthält. Es finden sich keine Hinweise auf eine Streichfarbe für einen Druckträger nach dem Tintenstrahlverfahren.

Die EP-A-0 283 300 beschreibt ein Tiefdruckverfahren, bei dem eine Streichfarbe mit einem in Wasser quellbaren Pigment vom Smektit-Typ verwendet wird. Es finden sich keine Hinweise auf eine Streichfarbe für ein Tintenstrahldruck-Papier.

Aus der US-A-4 792 487 ist eine Streichfarbe für einen Druckträger nach dem Tintenstrahl-Druckverfahren bekannt, die im wesentlichen aus einem Montmorillonit mit einem hohen Quellvermögen besteht und die gegebenenfalls ein Pigment mit einer hohen Oberfläche, wie synthetische Kieselsäure oder Calciumcarbonat, und ein wasserunlösliches Bindemittel enthält. Die Verwendung von Montmorillonit mit einem hohen Quellvermögen hat, wie nachstehend noch ausgeführt wird, bestimmte Nachteile.

Der Erfindung liegt die Aufgabe zugrunde, Pigmente zu entwikkeln, die in Streichfarben für Druckträger nach dem Tintenstrahl-Druckverfahren verwendet werden können und die hervorragend bedruckbare Striche ergeben. Diese Pigmente sollen vorzugsweise bei möglichst hohen Konzentrationen in den bindemittelhaltigen Streichfarben eingesetzt werden können, ohne daß die rheologischen Eigenschaften der Streichfarben beeinträchtigt werden.

Diese Aufgabe wird dadurch gelöst, daß als Pigmente in bindemittelhaltigen Streichfarben für Druckträger nach dem Tintenstrahldruckverfahren Dreischichtsilicate mit einem Quellvolumen von <15 ml/2 g verwendet werden.

Das Quellvolumen wird wie folgt bestimmt:
Ein kalibrierter 100 ml-Meßzylinder wird mit 100 ml destilliertem Wasser gefüllt. 2,0 g der zu messenden Substanz werden in Portionen von 0,1 bis 0,2 g langsam auf die Wasseroberfläche gegeben. Nach dem Absinken des Materials wird das nächste Quantum aufgegeben. Nach Beendigung der Zugabe wartet man eine Stunde und liest dann das Volumen der aufgequollenen Substanz in ml/2 g ab.

Bei den Ausgangsmaterialien für die erfindungsgemäß modifizierten Dreischichtsilicaten handelt es sich um natürliche oder synthetisch hergestellte Minerale vom Smektittyp, insbesondere um Bentonit, bzw. um dessen aktive Komponente Montmorillonit. Es können aber auch andere Smektite, wie Beidellit, Saponit, Glauconit oder Hectorit, verwendet werden. Die smektitischen Schichtsilicate sind in der Alkaliform, d.h. mit Alkaliionen (üblicherweise Natriumionen) auf den Zwischenschichtgitterplätzen, stark quellfähig und in die Einzellamellen delaminierbar, weshalb ihr Quellvermögen für die erfindungsgemäße Verwendung reduziert werden muß.

Werden die Dreischichtsilicate mit reduziertem Quellvermögen erfindungsgemäß als Pigmente in Streichfarben für Druckträger nach dem Tintenstrahldruckverfahren verwendet, so legen sich die Einzellamellen dachziegelartig versetzt auf die Oberfläche des Druckträgers und verhindern ein Durchschlagen der Tinte in und durch den Druckträger.

Zur Reduzierung des Quellvolumens können die Dreischichtsilicate durch Behandlung mit Säure unter partieller Auflösung der Mittellamelle in eine intramolekulare Kombination von Schichtstruktur und an den Rändern der Schichtpakete gebundender, hochoberflächiger, zweidimensionaler amorpher Kieselsäure überführt werden. Der Anteil der amorphen Kieselsäure in dem auf diese Weise "sauer aktivierten" Dreischichtsilicat beträgt etwa 10 bis 60 Gew.-%.

Bisher wurden die sauer aktivierten smektitischen Dreischichtsilicate in der Papierindustrie nur als Farbentwicklerpigmente in Streichfarben für Selbstdurchschreibepapiere verwendet.

Nach einer zweiten Alternative zur Reduzierung des Quellvolumens kann das Dreischichtsilicat durch Einbau von Metalloxid-Brücken in die Schichtstruktur modifiziert sein. Das Pigment stellt also einen durch Einbau von Oxidbrücken mehrwertiger Metalle in die Schichstruktur des Dreischichtsilicats erhaltenen "Pillared clay" dar.

Die erfindungsgemäß verwendeten "Pillared clays" (PILC) können nach an sich bekannten Verfahren hergestellt werden. Eine zusammenfassende Darstellung findet sich beispielsweise in Catal. Rev. Sci. Eng. 30(3) 457-499, (1988) "Pillared Clays as Catalysts" von F. Figueras.

Nach dieser Literaturstelle wird z.B. ein Calciumbentonit, der auf Zwischengitterplätzen Ca²⁺-Ionen enthält, z.B. mit Verbindungen mehrwertiger Metalle (Me = Al³⁺, Zr⁴⁺, Ti⁴⁺, Sn⁴⁺) in wäßriger Lösung zur Reaktion gebracht, wobei vorzugsweise im sauren pH-Bereich gearbeitet wird. Das erhaltene Material, ein Me-PILC, wird getrocknet und bei Temperaturen zwischen 110°C und 400°C getempert. Das Produkt ist nun ein nicht bzw. kaum mehr quellfähiges Schichtsilicat, da die Lamellen des Schichtsilicats über Me-Oxid-Brücken in einem durch Me definierten Abstand (bei Al³⁺ etwa 1,9 nm) fixiert sind. Diese Produkte weisen eine hohe spezifische Oberfläche (≥250 m²/g) und genau definierte Mikroporen auf. Infolge der verminderten Quellfähigkeit haben die daraus hergestellten Streichfarben eine gegenüber Streichfarben mit Alkalismektiten verminderte Viskosität.

Aus diesem Grund werden sowohl die sauer aktivierten Dreischichtsilicate als auch die "Pillared clays" als Pigmente für die erfindungsgemäß Anwendung verwendet, da sie hervorragend bedruckbare "Inkjet"-Striche sowohl für den Schwarz-Weiß-Druck sowie auch insbesondere für den Mehrfarbendruck ergeben.

Der Grund hierfür liegt zum einen in dem sehr hohen Formfaktor (Verhältnis Schichtdurchmesser zu Schichtdicke) der Dreischichtsilicate von ≥ 50:1, was einen Strich mit hoher Barrierewirkung entstehen läßt, so daß die Druckfarben an der Strichoberfläche gehalten werden. Der Formfaktor des unbehandelten Dreischichtsilicats ändert sich bei den sauer aktivierten Dreischichtsilicaten bzw. bei den "Pillared clays" praktisch nicht. Andererseits sorgen bei den sauer aktivierten Dreischichtsilicaten die an den Rändern der Schichtpakete befindlichen, saugfähigen Zonen, die durch die hochoberflächige, zweidimensionale amorphe Kieselsäure gebildet werden, sowie die Poren für eine schnelle Penetration der Lösemittel für die Druckfarben in den Strich und somit für eine Trennung von Druckfarbe und Lösemittel (Filtrationseffekt). Dadurch wird eine gute Wischfestigkeit erhalten. Entsprechendes gilt für die in den "Pillard clays" enthaltenen Mikroporen.

Eine weitere Verbesserung der Randschärfe der Druckpunkte läßt sich durch eine kationische Einstellung der Oberflächenladung der Dreischichtsilicate erzielen. Hierdurch erhält das Pigment in wäßriger Dispersion ein positives Zeta-Potential.

Die Messung des Zetapotentials erfolgt nach der Methode der Elektrophorese an dem "Laser-Zee-Meter 501" der Firma Pem Chem in 0,1 Gew.-%iger Suspension.

Mit den sauer aktivierten Dreischichtsilicaten und den "Pillared clays" lassen sich bindemittelhaltige Streichfarben mit einem Feststoffgehalt von bis zu etwa 40 Gew.-% applizieren. Als Bindemittel werden die üblichen hydrophilen Bindemittel, wie Polyvinylalkohol, Hydroxymethylcellulose, Hydroxyethylcellulose, Carboxymethylcellulose, hydrophile Styrol-Butadien-Latices und kationisierte Stärke in einer Menge von etwa 10 bis 50, vorzugsweise von etwa 20 bis 25 Gew.-Teilen auf 100 Gew.-Teile Pigment verwendet.

Quellfähige Alkalismektite, wie sie beispielsweise in der EP-A-0 572 037 beschrieben sind, bilden einen reinen Barrierestrich, wobei die Saugfähigkeit durch die Quellung der Smektite zustandekommt. Auf diese Weise entstehen zwar sehr intensive Farbdrucke, die aber eine geringe Punktschärfe haben, was sich vor allem bei Schwarz-Weiß-Drucken bemerkbar macht. Auch ist die Wischfestigkeit schlechter als bei den erfindungsgemäß verwendeten Pigmenten.

Die Erfindung ist durch die nachstehenden Beispiele in nicht einschränkender Weise erläutert.

### Beispiel 1 (a-d)

100 Gewichtsteile eines in einem Hydrocyclon ausgereinigten Calciumbentonits wurden mit 36 (a) 40 (b) bzw. 44 (c) Gew.-% einer 30-%igen Salzsäure (otro (= ofentrocken) auf otro Bentonit) 10 Stunden bei 95 bis 98°C aktiviert. Der sauer aktivierte Bentonit wurde jeweils unter Anlegen eines leichten Vakuums abfiltriert und mit destilliertem Wasser praktisch chloridfrei gewaschen. Der Filterkuchen wurde bei etwa 100°C auf ein Restwassergehalt von 6 bis 8 Gew.-% getrocknet, vorvermahlen und in einer Alpine-Jetmill auf <20 µm mahlgesichtet. Die säureaktivierten Bentonite hatten folgende Quellvolumina: (a) = 12 ml/2 g; (b) = 10 ml/2 g; (c) = 7,5 ml/2 g.

Eine weitere Variante (d) entspricht der Variante (c), nur wurde das saure Filtergut vor der Trocknung durch Einkneten von 4 Gew.-% Calciumcarbonat mit einer Teilchengröße von etwa 40% < 2 µm (Hydrocarb 40® der Firma Plüss-Staufer-Omya) neutralisiert. Die weitere Verarbeitung erfolgte in der vorstehend angegebenen Weise.

Die relevanten Daten der Proben nach dem Beispiel 1 sind in der Tabelle zusammengefaßt. Sie wurden wie folgt ermittelt:
- spezifische Oberfläche
   Die Messung erfolgte nach der BET-Methode analog zur DIN 66 132.
- Anteil der gebundenen amorphen Kieselsäure
   Das Pigment wird in einem V2A-Gefäß mit der doppelten Menge an wasserfreier Soda versetzt und in 3-%iger wäßriger Suspension 10 Minuten unter Rückfluß gekocht. Nach dem Abfiltrieren der Mutterlauge wird die Prozedur noch zweimal wiederholt. Aus den vereinigten Mutterlaugen wird ein aliquoter Anteil entnommen, und die darin enthaltene Natriumsilicatlösung wird nach dem Ansäuern mit Schwefelsäure mittels einer 10%igen Natriummolybdatlösung gelb angefärbt. Die Farbintensität, bestimmt am Beckman-Spektralphotometer bei 440 nm, ergibt über eine Eichkurve die Konzentration an Natriumsilicat, woraus der Gehalt an amorpher SiO₂ berechnet werden kann.
- Körnungsanalyse
   Die Messung erfolgte im Malvern Patricle Sizer 2600 c® in wäßriger Suspension.
- Streichfarben In 1000 Gewichtsteilen Anmachwasser wurden 30 Gewichtsteile Moviol 2898® (Polyvinylalkohol der Firma Hoechst) gelöst; in diese Lösung wurden 100 Gewichtsteile Pigment unter wirksamen Rühren eingetragen. Hierbei wurde der pH-Wert durch Zudosierung von 20%iger NaOH stets zwischen 9 und 10 gehalten. Nach dem Pigmenteintrag wurde der pH-Wert auf 9,5 eingestellt, worauf die Dispergierung noch 10 Minuten fortgesetzt wurde. Die erhaltene Streichfarbe wurde mit einem Handrakel auf ein holzfreies, massegeleimtes Rophpapier (80 g/m²) aufgetragen. Die Ermittlung des Streichgewichtes erfolgte durch Differenzbildung gleicher Flächen von gestrichenem und Rohpapier nach Äquilibrierung bei 50% Feuchtigkeit/23°C.
- Wischfestigkeit
   Die gestrichenen und leicht geglätteten Papiere wurden in einem Hewlett-Packard Deskjet 550 C Inkjetdrucker mit einem vollständig schwarzen Balken von etwa 13 cm² bedruckt. 30 Sekunden nach Beendigung des Druckvorganges wurde die Fläche einem "Fingerwischtest" unterzogen und das Ergebnis visuell eingestuft, wobei gilt:
   - +++: kein Verwischen erkennbar
   - ++: leichtes Verwischen
   - +: deutlich erkennbares Verwischen
   - 0: starkes Verwischen.
- Punktschärfe
   Die gestrichenen und leicht geglätteten Papiere wurden in einem Hewlett-Packard Deskjet 550 C mit einem gerasterten Balken von etwa 13 cm² bedruckt (1 Rasterpunkt pro mm). Die Punkte wurden unter dem Lichtmikroskop auf ihre Punktschärfe untersucht, wobei gilt:
   - +++: kleinflächige, sehr randscharfe Punkte
   - ++: größerflächige, leicht ausgefranste Punkte
   - +: deutliches Verlaufen der Punkte
   - 0: starkes Verlaufen der Punkte, keine Kreiskontur mehr erkennbar.
- Farbbrillianz
   Die gestrichenen und leicht geglätteten Papiere wurden in einem Hewlett-Packard Deskjet 550 C mit vollflächigen Balken von etwa 13 cm² in den Farben hellblau, tiefblau, gelb, grün, rot und violett bedruckt. Die Beurteilung der Farbbrillianz erfolgte visuell, wobei gilt:
   - +++: brilliante, klare Farben hoher Dichte
   - ++: gute Farben mittlere Dichte
   - +: Farben geringer Brillianz
   - 0: schlechte, blasse Balkenfärbung
Nach Tabelle I ergaben die erfindungsgemäßen Pigmente Inkjet-Striche mit guter bis ausgezeichneter Farbbrillianz. Die Punktschärfe und die Wischfestigkeit erhöht sich mit dem Säureaufschlußgrad und dem Auftragsgewicht.

### Beispiel 2

Das erfindungsgemäße Pigment wurde wie nach Beispiel 1 (a) hergestellt, mit der Abweichung, daß der Filterkuchen nach dem Auswaschen in Wasser redispergiert wurde. Der Dispersion wurden 3 Gew.-% (bezogen auf otro Bentonit) eines stark kationischen Dicyandiamid-Formaldehydkonzentrat (Melflock C 3® von SKW) zudosiert. Nach einer Reaktionszeit von 5 Minuten wurde erneut filtriert, einmal gewaschen und wie vorstehend beschrieben aufgearbeitet. Eine Messung des Zeta-Potentials einer 0,1 gew.-%igen Dispersion am Laser Zee Meter® der Firma PemChem ergab einen Wert von +12 mV (im Vergleich zu -36 mV beim unbehandelten Produkt 1a). Nach der Tabelle konnte durch die Kationisierung die Punktschärfe des Andruckes verbessert werden.

### Beispiel 3

100 Gewichtsteile des ausgereinigten Calciumbentonits von Beispiel 1 wurden in einer 3 gew.-%igen Suspension von Polyaluminiumchlorid (3 mmol Al/g Calciumbentonit) zu einem Al-PILC umgesetzt. Nach einer Reaktionszeit von 2 Stunden bei 80°C wurde das Produkt filtriert, salzfrei gewaschen, bei 120°C getrocknet und bei 450°C calciniert. Das Quellvolumen betrug 3 ml/2 g.

Trotz der verhältnismäßig geringen spezifischen Oberfläche von 250 m²/g ergab das Pigment scharfe, brilliante und wischfeste Inkjetdrucke.

### Vergleichsbeispiel

Der Calciumbentonit von Beispiel 1 wurde nach der Hydrocyclonausreinigung durch Vakuumfiltration auf einen Feststoffgehalt von etwa 30 Gew.-% eingedickt. Das Produkt wurde in einem Doppelwellenmischer mit 1 Gew.-% Soda geknetet, wobei ein teilweiser Austausch der Calciumionen auf den Zwischengitterplätzen durch Natriumionen stattfand. Das Quellvolumen betrug 22 ml/2g. Das aktivierte Material wurde etwa 3 Stunden bei etwa 110°C schonend auf einen Wassergehalt von etwa 8 Gew.-% getrocknet und in einer Jetmühle mahlgesichtet. Es wurde mit einem Pendraulikrüher hochscherend in Wasser dispergiert (Feststoffgehalt der Dispersion: 18 Gew.-%) und auf das Rohpapier gerakelt. Nach der Tabelle zeigte der Barrierestrich zwar eine hohe Farbbrillianz, aber auch eine geringe Punktschärfe und Wischfestigkeit.

**Tabelle**

| Beispiel | spez. Oberfläche (m²/g) | Anteil amorphe SiO₂ (%) | Topcut (µm) | Streichfarbe | | Strich gewicht (g/m²) | Wischfestig | Punktschärfe | Farbbrillianz |
|---|---|---|---|---|---|---|---|---|---|
| | | | | Feststoff (%) | Brookf. 100 U/min (mPa.s) | | | | |
| 1a | 320 | 32 | 15 | 35 | 560 | 10.0 | ++ | ++ | +++ |
| | | | | | | 6.5 | ++ | ++ | ++ |
| | | | | | | 3.3 | ++ | ++ | ++ |
| 1b | 358 | 43 | 17 | 35 | 480 | 9.8 | ++ | +++ | +++ |
| 1c | 373 | 53 | 15 | 36 | 423 | 9.6 | +++ | +++ | +++ |
| 1d | 362 | 49 | 17 | 40 | 450 | 10.0 | ++ | +++ | +++ |
| 2 | 316 | 32 | 15 | 38 | 530 | 9.7 | ++ | +++ | +++ |
| 3 | 250 | -- | 16 | 30 | 620 | 10.1 | +++ | +++ | +++ |
| VB | 65 | -- | 18 | 14 | 650 | 10.5 | + | + | +++ |
| | | | | | | 7.0 | + | +0 | +++ |
| | | | | | | 3.9 | +0 | 0 | +++ |

## Patentansprüche

1. Verwendung von Dreischichtsilicaten mit einem Quellvolumen von < 15 ml/2 g als Pigmente in bindemittelhaltigen Streichfarben für Druckträger nach dem Tintenstrahl-Druckverfahren.

2. Verwendung nach Anspruch 1, dadurch gekennzeichnet, daß das Dreischichtsilicat durch saure Aktivierung eines Alkali- oder Erdalkalismektits oder durch Einbau von Metalloxid-Brücken in dessen Schichtstruktur modifiziert ist.

3. Verwendung nach Anspruch 1 oder 2, dadurch gekennzeichnet, daß das sauer aktivierte Dreischichtsilicat an den Rändern der Schichtpakete (Schichtstruktur) hochoberflächige zweidimensionale amorphe Kieselsäure enthält, deren Anteil etwa 10 bis 60 Gew.-% beträgt.

4. Verwendung nach Anspruch 1 oder 2, dadurch gekennzeichnet, daß das Pigment einen durch Einbau von Oxidbrücken von mehrwertigen Metallen die Schichtstruktur des Dreischichtsilicats erhaltenen "Pillared clay" darstellt.

5. Verwendung nach einem der Ansprüche 1 bis 4, dadurch gekennzeichnet, daß das Pigment in wäßriger Dispersion ein positives Zeta-Potential hat.

6. Verwendung nach einem der Ansprüche 1 bis 5, dadurch gekennzeichnet, daß das Pigment in einer Streichfarbe mit einem hydrophilen Bindemittel in einer Menge von etwa 100 Gew.-Teilen auf etwa 10 bis 50, vorzugsweise von etwa 20 bis 25 Gew.-Teilen Bindemittel verwendet wird.

## Claims

1. Use of three-layered silicates with swelling volume of < 15 ml/2 g as pigments in coating inks containing binders for printing stock in accordance with the ink-jet printing process.

2. Use according to Claim 1, characterised in that the three-layered silicate is modified by acid activation of an alkaline or alkaline earth smectite or by incorporating metal oxide bridges in its layered structure.

3. Use according to Claim 1 or 2, characterised in that the acid activated three-layered silicate contains at the edges of the multilayer (layered structure) two-dimensional amorphous silicic acid with a high surface area and the proportion of which is approximately 10 to 60 % by weight.

4. Use according to Claim 1 or 2, characterised in that the pigment represents a "Pillared clay" obtained by incorporating oxide bridges of multivalent metals into the layered structure of the three-layered silicate.

5. Use according to any one of Claims 1 to 4, characterised in that in aqueous dispersion the pigment has a positive zeta potential.

6. Use according to any one of Claims 1 to 5, characterised in that the pigment is used in a coating ink with a hydrophilic binder in a quantity of approximately 100 parts by weight per approximately 10 to 50, preferably approximately 20 to 25 parts by weight of binder.

## Revendications

1. Utilisation de silicates tricouches ayant un volume de gonflement inférieur à 15 ml/2 g, en tant que pigments dans des encres pour couchage contenant un liant, destinées à un support d'impression par le procédé d'impression au jet d'encre.

2. Utilisation selon la revendication 1, caractérisée en ce que le silicate tricouche est modifié par activation acide d'une smectite alcaline ou alcalino-terreuse, ou par incorporation de ponts d'oxydes métalliques dans sa structure lamellaire.

3. Utilisation selon la revendication 1 ou 2, caractérisée en ce que le silicate tricouche à activation acide contient sur les bords des paquets de lamelles (structure lamellaire) de la silice amorphe bidimensionnelle ayant une grande aire spécifique, dont la proportion est d'environ 10 à 60 % en poids.

4. Utilisation selon la revendication 1 ou 2, caractérisée en ce que le pigment représente une "argile columnaire", obtenue par incorporation de ponts d'oxydes de métaux polyvalents dans la structure lamellaire du silicate tricouche.

5. Utilisation selon l'une des revendications 1 à 4, caractérisée en ce que le pigment a en dispersion aqueuse un potentiel zêta positif.

6. Utilisation selon l'une des revendications 1 à 5, caractérisée en ce que le pigment est utilisé dans une encre pour couchage avec un liant hydrophile en une quantité d'environ 100 parties en poids pour environ 10 à 50, et de préférence d'environ 20 à 25 parties en poids de liant.
